# EUROPEAN PATENT SPECIFICATION

(11) **EP 0 858 263 B1**
(45) Date of publication and mention of the grant of the patent: **30.01.2002**
(21) Application number: 96934868.9
(22) Date of filing: 31.10.1996
(51) Int. Cl.: A21C 3/08

(54) **A METHOD AND A DEVICE FOR SHAPING DOUGH-LIKE MATERIAL**
VERFAHREN UND VORRICHTUNG ZUM FORMEN VON TEIG UND DERGLEICHEN
PROCEDE ET APPAREIL DE MISE EN FORME DE MATERIAU DE TYPE PATE LEVEE

(30) Priority: 31.10.1995 FI 955194
(43) Date of publication of application: 19.08.1998
(73) Proprietor: Julin, Martti Olavi, 8350 Routio (FI)
(72) Inventor: Julin, Martti Olavi, 8350 Routio (FI)
(74) Representative: Laitinen, Pauli Sakari
(86) International application number: FI9600582
(87) International publication number: WO9716069

(56) References cited:
- US-A- 1 974 503

## Description

The object of the invention is a method and a device for shaping dough-like material, particularly for plaiting it.

In the bakery industry, plaited sweet yeast dough is plaited manually from three or four strands of ready-made dough. The strands of dough come from the dough roller in the right size for the plaiters. As a machine for plaiting is not known, the work is always manual, which is naturally expensive. A machine for twisting together a pair of loaves of bread is known from US-A-1974503.

This invention is intended to automate the plaiting procedure, which at present requires a great deal of monotonous manual labour, and to make a product that seems handmade, while nevertheless keeping costs well under control.

The invention is based on plaiting the strands of dough by using plaiting rakes, in the same way as by hand, by lifting the strands of dough over one another in a set order.

The characteristics of a dough-plaiting machine according to the invention are described in greater detail in the accompanying claims.

A dough-plaiting machine according to this invention is extremely reliable and easy to maintain, because it employs many so-called standard components, while the number of components is relatively small. The washing and cleaning required has been taken into account in the operation of the machine. Plaiting can be easily adjusted, if the properties of the dough alter. The ends of the plait are shaped without waste.

In the following text, the invention is described with reference to the accompanying drawings.

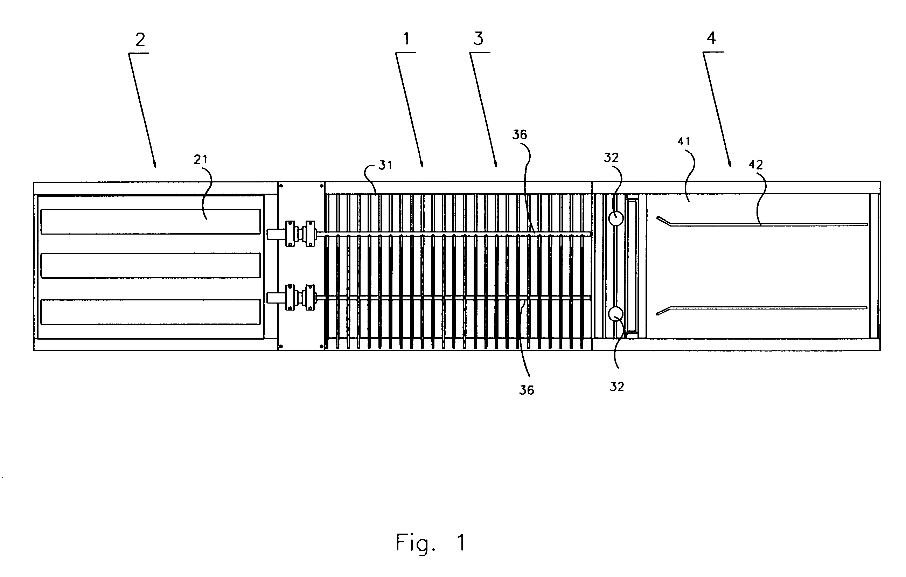

Figure 1 shows a top view of the device according to the invention;

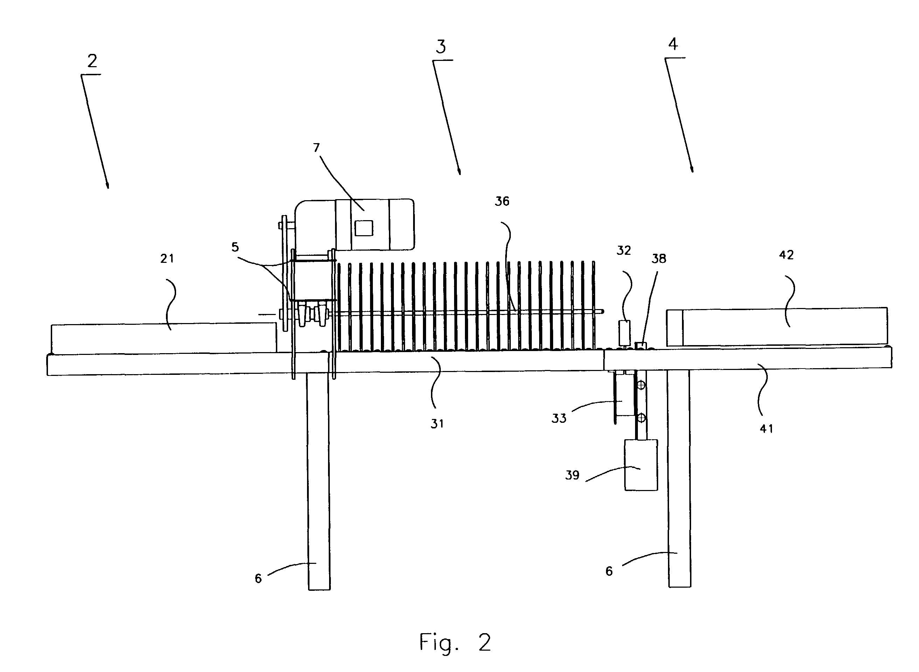

Figure 2 shows a side view of the device in Figure 1;

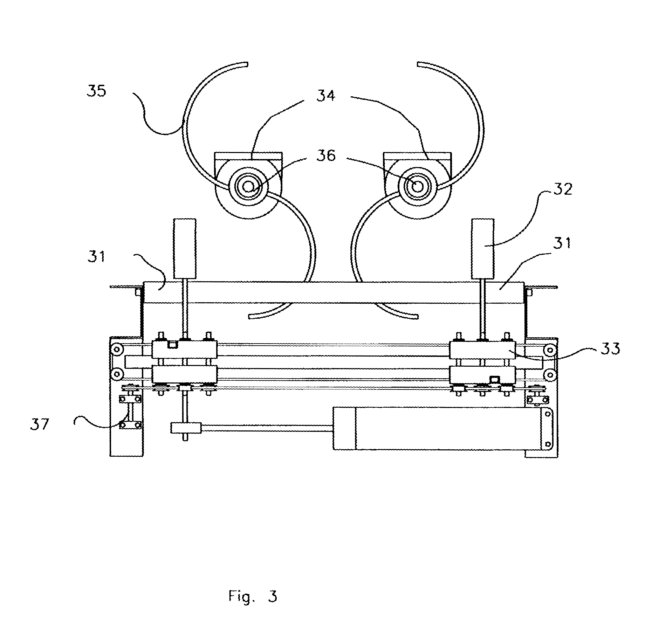

Figure 3 shows an end view of a device according to the invention;
Figure 4 shows a more detailed picture of the pressing rollers of the machine, which are described later; and
Figure 5 shows diagrams of plaiting as a series of stages.

The invention is described by referring to all the accompanying drawings, which show one embodiment of the invention that is regarded as good, without being limited to it in any way. The method according to the invention will become apparent from the following description of the device.

The invention described here consists of a device, which shapes a finished plait from ready-made strands of dough. The plaiting machine 1 includes, in the direction of movement of the process, a dough strand feed conveyor section 2, at the front of which there are places 21 ready for the strands of dough, which are not drawn for reasons of clarity. After the feed conveyor 2, there is a conveyor and shaping section 3, in which the actual shaping of the strands of dough takes place.

In the conveyor and shaping section 3, there is a lower conveyor formed of conveyor rollers 31 set at regular intervals, in such a way that the prongs 35 of the plaiting rake fit between the rollers. At the rear end of the lower conveyor, there are press rollers 32 and a mechanism 33 for moving the press rollers. The press rollers 32 move transversely in relation to the lower conveyor. The press rollers 32 can be rotated by a drive device 37, which facilitates the movement of the plait. After the press rollers, there is a shaping device 38 and an operating device 39 for it. After shaping, there is an output section 4, with an output conveyor 41 and side supports 42.

The conveyor and shaping section 3 includes, in the area above the conveyor rollers 31, plaiting rakes 35, attached to axles 36 so that each rake prong 35 moves in the space between two rollers 31. The axles 36 are set essentially parallel to the direction of travel of the dough strands being plaited. The rake prongs 35 are curved in such a way that the prongs on opposite sides of the axle curve in opposite directions, to permit plaiting in both directions. Thus the prongs are generally 'S'-shaped.

The attachment of the plaiting rakes to the bearing unit 34 permits easy removal. The bearing units 34 and the power sources 7 for the rakes are set on installation plates 5 above the lower conveyor 31. The entire device is set, for example, on legs 6 on the floor, as shown.

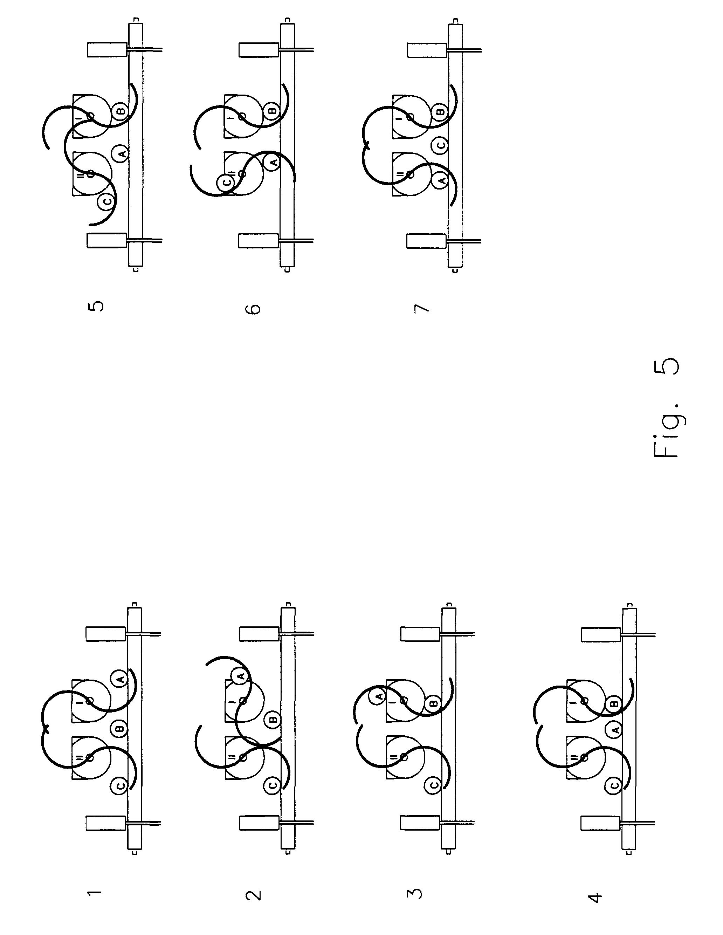

The invention works as follows. The ready-made strands of dough are loaded manually or automatically onto the feed conveyor 2, where there are places 21 ready for the dough strands. On the feed conveyor 2, the dough strands move under the operating devices 34, 7 beneath the plaiting rakes 35 to the lower conveyor 31. At this stage, the prongs 35 of the plaiting rakes are vertical. Here reference is also made to Figure 5, as it shows the positions of the rakes in greater detail. When the strands of dough reach the press rollers 32, the lower conveyor 31 stops and the press rollers 32 move from the side of the conveyor towards the centre, when the ends of the strands of dough are squeezed between the press rollers.

Now the plaiting rakes 35 begin to plait by rotating, as described next by referring to Figure 5, half a revolution at a time, taking the strands of dough in turn from the lower conveyor 31 and turning them across one another. Once plaiting has started, the press rollers 32 move to the side, allowing the plait to move between them. During plaiting, the plait moves forward the requisite distance on the lower conveyor.

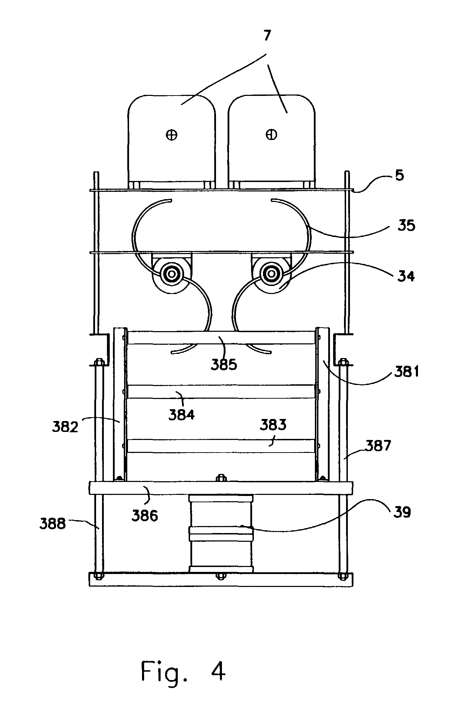

The ends of a plaited product are shaped by a shaping device 38, composed, as seen most dearly in Figure 4, of essentially vertical frames 381, 382, between which there are rollers 383, 384, 385 set on top of each other. Frames 381 and 382 are connected to an essentially horizontal frame 386, which is arranged at both ends to be propelled along guides 387 and 388 by drive device 39.

At the beginning, roller 383 is on the same level as rollers 31. Once the front of the plaited product has passed roller 383, drive device 39 pulls shaping device 38 downwards, squeezing the front of the plaited product between roller 384 and the roller 31 preceding it in the direction of travel of the product, while the squashed ends turn under the plaiting, as the plait moves forward.

At the end of the plaiting, the press rollers 32 move from the sides to the centre, squeezing the ends of the strands of dough between the press rollers. The press rollers 32 then open and the shaping device 38 is pulled downwards by its drive device 39, so that roller 385 squashes the end of the plait. The plaited product is then reversed along the lower conveyor, so that the squashed ends of the strands of dough of the plaited product turn under the plaiting. In this way, the last part of both ends of the product is tucked under the product and the result is aesthetically beautiful.

The stages of plaiting by the invention are shown as a series of diagrams in Figure 5. The illustrations only show the two rakes I and II used for plaiting, and the mutual positions of the strands of dough A, B and C.

As explained above, the strands of dough are fed to the conveyor section 3 from section 2. Normally strands A, B and C are set laterally at regular intervals. In the first stage, rake I rotates essentially half a revolution anticlockwise and moves dough strand A upwards and dough strand B laterally towards the position previously occupied by A. Dough strand A now drops essentially to the original position of strand B (stages 1 - 4). Rake II now begins its clockwise rotation and raises strand C, simultaneously moving strand A towards the original position of strand C. Strand C drops between strands A and B.

The plaiting of the three-strand product used as an example is completed by continually repeating the procedure described above. The ends are shaped as described above.

If more than three strands of dough are used, there is always one less parallel plaiting rake than there are strands to be plaited. In multi-rake plaiting, it is advantageous also to carry out the lateral movement of the strands using the convex side of the rakes, so that plaiting will take place in an optimal fashion. It is obvious, that the width of a device according to the invention increases, if there is a greater number of plaiting rakes parallel to one another. However, the other properties do not change.

As a final stage, the finished product moves to the outlet conveyor 41, the speed of which is such that the plaiting is neat. The side supports 42 of the outlet conveyor hold the finished plaiting at the correct width. After this, the process can start from the beginning again.

The invention may be varied in many ways, without deviating from the basic principle and inventive concept of the invention as disclosed in the appended claims.

## Claims

1. A device for shaping dough-like material, especially for the plaiting of strands of dough comprising a conveyor (31) for transporting the strands of dough, **characterized in that** it further comprises a press device (32) for pressing the ends of the strands of dough, and curved implements (35) arranged to rotate around an axle (36) running essentially parallel to the direction of travel of the conveyor (31) and to the strands of dough, by means of which the strands of dough can be arranged into the desired plaited shape as they move along the conveyor (31).

2. A device according to claim 1, **characterized in that** it also includes a shaping device (38) for shaping the ends of the plaited product.

3. A device according to claim 1, **characterized in that** the curved plaiting implements (35) curve in opposite directions on opposite sides of the axle (36) in order to facilitate plaiting in two directions, and extend into the area below the top of the conveyor (31).

4. A device according to claim 1, **characterized in that** the plaiting implements (35) are one less in number than the number of the strands of dough to be plaited.

5. A device according to claim 2, **characterized in that** the shaping device (38) comprises rollers (383, 384, 385) parallel to the rollers (31) of the conveyor and attached to a vertically movable frame (381, 382, 386).

6. A method for shaping dough-like material, especially for the plaiting of strands of dough, **characterized in that** the desired number of parallel strands of dough are deposited on a conveyor (31), the front ends of the strands in the direction of travel are pinched together, the strands are plaited by lifting them over one another with implements (35) rotating transversely in relation to the direction of the strands, and the rear ends of the strands relative to the direction of travel are pinched together.

7. A method according to claim 6, **characterized in that** the front and rear ends of the plaited product are shaped with a special shaping device (38).

8. A method according to claim 6, **characterized in that** the flattened ends of the plaited product are turned under the product with the aid of the shaping device (38) and by running the conveyor (31) forwards and correspondingly backwards.

9. A method according to claim 6, **characterized in that** the devices for performing the plaiting, particularly curved rods (35), attached to a longitudinal axle, are essentially rotated forwards and backwards a half turn at a time in order to plait the strands of dough in two directions.

10. A method according to claim 6, **characterized in that** the curved rods (35) are also used to transport the strands of dough, which are to be plaited, sideways along the conveyor (31).

## Patentansprüche

1. Vorrichtung zum Formen von teigartigem Material, insbesondere zum Flechten von Teigsträngen, umfassend eine Fördereinrichtung (31) zum Transport der Teigstränge, **dadurch gekennzeichnet, daß** sie ferner umfaßt eine Presseinrichtung (32) zum Pressen der Enden der Teigstränge und gekrümmte Werkzeuge (35), die so angeordnet sind, daß sie um eine Achse (36) rotieren, die im wesentlichen parallel zur Bewegungsrichtung der Fördereinrichtung (31) und zu den Teigsträngen verläuft, mit deren Hilfe die Teigstränge in die gewünschte geflochtene Form gebracht werden können, während sie entlang der Fördereinrichtung (31) wandern.

2. Vorrichtung nach Anspruch 1, **dadurch gekennzeichnet, daß** sie auch eine Formeinrichtung (38) zur Formen der Enden des geflochtenen Produkts umfaßt.

3. Vorrichtung nach Anspruch 1, **dadurch gekennzeichnet, daß** sich die gekrümmten Flechtwerkzeuge (35) an entgegengesetzten Enden der Achse (36) in entgegengesetzten Richtungen krümmen, um das Flechten in zwei Richtungen zu erleichern, und sich in den Bereich unterhalb der Oberseite der Fördereinrichtung (31) erstrecken.

4. Vorrichtung nach Anspruch 1, **dadurch gekennzeichnet, daß** die Anzahl der Flechtwerkzeuge (35) eines weniger ist als die Anzahl der zu flechtenden Teigstränge.

5. Vorrichtung nach Anspruch 2, **dadurch gekennzeichnet, daß** die Formeinrichtung (38) Rollen (383, 384, 385) parallel zu den Rollen (31) der Fördereinrichtung umfaßt, die an einem vertikal beweglichen Rahmen (381, 382, 386) befestigt sind.

6. Verfahren zum Formen von teigartigem Material, insbesondere zum Flechten von Teigsträngen, **dadurch gekennzeichnet, daß** die gewünschte Zahl von parallelen Teigsträngen auf eine Fördereinrichtung (31) aufgebracht wird, die vorderen Enden der Stränge in der Bewegungsrichtung zusammengepreßt werden, die Stränge geflochten werden, indem sie einer über den anderen mit Werkzeugen (35) gehoben werden, die quer in Bezug auf die Richtung der Stränge rotieren, und die hinteren Enden der Stränge relativ zur Bewegungsrichtung zusammengepreßt werden.

7. Verfahren nach Anspruch 6, **dadurch gekennzeichnet, daß** die vorderen und hinteren Enden des geflochtenen Produkts mit einer speziellen Formeinrichtung (38) geformt werden.

8. Verfahren nach Anspruch 6, **dadurch gekennzeichnet, daß** die abgeflachten Enden der geflochtenen Produkte mit Hilfe der Formeinrichtung (38) und durch Hinundherbewegen der Fördereinrichtung (31) unter das Produkt gedreht werden.

9. Verfahren nach Anspruch 6, **dadurch gekennzeichnet, daß** die Einrichtungen zur Durchführung des Flechtens, insbesondere die gekrümmten Stäbe (35), die an einer Längsachse befestigt sind, jedesmal im wesentlichen eine halbe Umdrehung vorwärts und rückwärts gedreht werden, um die Teigstränge in zwei Richtungen zu flechten.

10. Verfahren nach Anspruch 6, **dadurch gekennzeichnet, daß** die gekrümmten Stäbe (35) auch dazu verwendet werden, die zu flechtenden Teigstränge seitwärts entlang der Fördereinrichtung (31) zu transportieren.

## Revendications

1. Appareil de mise en forme de matériau de type pâte levée, en particulier de tressage des bâtons de pâte, comprenant un convoyeur (31) pour transporter les bâtons de pâte, **caractérisé en ce qu'**il comprend en outre un dispositif de presse (32) pour comprimer les extrémités des bâtons de pâte, et des outils courbes (35) disposés pour tourner autour d'un axe (36) se déplaçant de façon sensiblement parallèle au sens de déplacement du convoyeur (31) et à des bâtons de pâte, au moyen desquels les bâtons de pâte peuvent être mis en forme tressée souhaitée lorsqu'ils se déplacent le long du convoyeur (31).

2. Appareil selon la revendication 1, **caractérisé en ce qu'**il comprend également un dispositif de mise en forme (38) pour mettre en forme les extrémités du produit tressé.

3. Appareil selon la revendication 1, **caractérisé en ce que** les outils de tressage courbes (35) se courbent en sens opposés sur les côtés opposés de l'axe (36) afin de faciliter le tressage en deux sens, et s'étendent jusqu'à la zone au-dessous du sommet du convoyeur (31).

4. Appareil selon la revendication 1, **caractérisé en ce que** les outils de tressage (35) sont un moins en nombre que le nombre des bâtons de pâte à tresser.

5. Appareil selon la revendication 2, **caractérisé en ce que** l'appareil de mise en forme (38) comprend des rouleaux (383, 384, 385) parallèles à des rouleaux (31) du convoyeur et fixés à un cadre verticalement déplaçable (381, 382, 386).

6. Procédé de mise en forme de matériau de type pâte levée, en particulier de tressage des bâtons de pâte, **caractérisé en ce que** le nombre souhaité de bâtons de pâte parallèles est disposé sur un convoyeur (31), les extrémités frontales des bâtons en sens de déplacement sont comprimées, les bâtons sont tressés en les soulevant l'un dessus de l'autre avec des outils (35) en rotation transversale par rapport au sens des bâtons, et les extrémités postérieures des bâtons par rapport au sens de déplacement sont comprimées.

7. Procédé selon la revendication 6, **caractérisé en ce que** les extrémités frontales et postérieures du produit tressé sont mises en forme avec un dispositif de mise en forme spécial (38).

8. Procédé selon la revendication 6, **caractérisé en ce que** les extrémités aplaties du produit tressé sont tournées sous le produit à l'aide du dispositif de mise en forme (38) et en actionnant le convoyeur (31) en avant et de façon correspondante en arrière.

9. Procédé selon la revendication 6, **caractérisé en ce que** l'on fait tourner les dispositifs destinés à effectuer le tressage, en particulier des tiges courbes (35) fixées à l'axe longitudinal, sensiblement en avant et en arrière un demi-tour à la fois afin de tresser les bâtons de pâte en deux sens.

10. Procédé selon la revendication 6, **caractérisé en ce que** les tiges courbes (35) sont également utilisées pour transporter les bâtons de pâte, qui devront être traités, latéralement le long du convoyeur (31).
